(19) Europäisches Patentamt
European Patent Office
Office européen des brevets

(11) **EP 3 934 929 B1**

(12) **EUROPÄISCHE PATENTSCHRIFT**

(45) Veröffentlichungstag und Bekanntmachung des Hinweises auf die Patenterteilung:
**04.09.2024   Patentblatt 2024/36**

(21) Anmeldenummer: **20711507.2**

(22) Anmeldetag: **27.02.2020**

(51) Internationale Patentklassifikation (IPC):
**B60K 35/00** *(2024.01)* **G06F 3/01** *(2006.01)*
**G06T 7/20** *(2017.01)* **G06T 7/593** *(2017.01)*
**B60K 35/10** *(2024.01)* **B60K 35/28** *(2024.01)*
**G06V 10/60** *(2022.01)* **G06V 20/59** *(2022.01)*
**G06V 20/64** *(2022.01)* **G06V 40/20** *(2022.01)*
**G06V 40/10** *(2022.01)*

(52) Gemeinsame Patentklassifikation (CPC):
**B60K 35/00; B60K 35/10; B60K 35/28;**
**G06F 3/017; G06V 10/60; G06V 20/597;**
**G06V 20/64; G06V 40/10; G06V 40/20;**
B60K 2360/1464; B60K 2360/175; B60K 2360/21;
B60K 2360/333

(86) Internationale Anmeldenummer:
**PCT/EP2020/055158**

(87) Internationale Veröffentlichungsnummer:
**WO 2020/178137 (10.09.2020 Gazette 2020/37)**

(54) **VERFAHREN ZUR KLASSIFIZIERUNG VON OBJEKTEN INNERHALB EINES KRAFTFAHRZEUGS**

METHOD FOR CLASSIFYING OBJECTS WITHIN A MOTOR VEHICLE

PROCÉDÉ DE CLASSEMENT D'OBJETS DANS UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2019   DE 102019105778**

(43) Veröffentlichungstag der Anmeldung:
**12.01.2022   Patentblatt 2022/02**

(73) Patentinhaber: **Valeo Schalter und Sensoren GmbH**
**74321 Bietigheim-Bissingen (DE)**

(72) Erfinder: **HAEBIG, Thomas**
**96476 Bad Rodach (DE)**

(74) Vertreter: **Pothmann, Karsten et al**
**Valeo Schalter und Sensoren GmbH**
**VIC-E-IP**
**Laiernstraße 12**
**74321 Bietigheim-Bissingen (DE)**

(56) Entgegenhaltungen:
WO-A2-2014/032822      CN-A- 105 518 480
US-A1- 2016 061 619      US-B2- 8 958 911

**EP 3 934 929 B1**

**Beschreibung**

Die vorliegende Erfindung betrifft ein Verfahren zur Klassifizierung von Objekten innerhalb eines Innenraums eines Fahrzeugs.

Auch betrifft die vorliegende Erfindung eine Vorrichtung zur Klassifizierung von Objekten innerhalb eines Innenraums eines Fahrzeugs.

Des Weiteren betrifft die vorliegende Erfindung ein Fahrerassistenzsystem mit einer Vorrichtung zur Klassifizierung von Objekten innerhalb eines Innenraums eines Fahrzeugs.

Auch betrifft die vorliegende Erfindung ein Computerprogrammprodukt, umfassend Befehle, die bei der Ausführung des Programms durch einen Computer diesen veranlassen, das Verfahren auszuführen.

Die Automobilindustrie legt immer mehr Wert darauf, Fahrzeuginsassen und Fußgänger vor Schäden zu schützen und ein erhöhtes Sicherheitsniveau zu gewährleisten. Gleichzeitig erwarten die Kunden ein intuitives Benutzererlebnis während der Fahrt wie beispielsweise Interaktion mit Infotainment- und Verbindungsfunktionen in ihrem Fahrzeug. Es wird erwartet, dass allmählich höhere Grade der Fahrautomatisierung in Fahrzeugdesigns einbezogen werden. Auf dem Weg zu solch einem hoch automatisierten Fahren ist es wichtig zu wissen, was innerhalb eines Kraftfahrzeugs passiert. Moderne Fahrerassistenzsysteme (Advanced Driver Assistance System, ADAS) und möglicherweise in Zukunft autonome Fahrzeuge erfordern genaue Informationen über den Fokus des Fahrers und die Vorgänge im Fahrzeug. Beispielsweise wie abgelenkt ist der Fahrer oder kann der Fahrer antworten. Hier setzen Kamera-basierte Sensoranwendungen in der Kabine an. Sie erkennen das Verhalten des Fahrers und liefern diese Informationen an das Fahrerassistenzsystem, um entsprechend reagieren zu können.

Bis zum Übergang von den Fähigkeiten der aktuellen Fahrerassistenzsystem-Implementierungen zu einem wirklich autonomen Betrieb ist jedoch noch viel zu tun. Ein wichtiger Teil dieses evolutionären Prozesses wird sein, wie nahtlos der Wechsel vom autonomen Modus in den manuellen Modus in bestimmten Szenarien durchgeführt werden kann. Um voll wirksam zu sein, muss diese Änderung auf unkomplizierte und benutzerfreundliche Weise vorgenommen werden. Das Fahrerassistenzsystem des Fahrzeugs erfordert fortlaufend Zugang zu genauen, sehr detaillierten Informationen über den biomechanischen und kognitiven Zustand des Fahrers. 3D-Kameras ermöglichen dabei völlig neue Mensch-Maschine-Schnittstellen-Konzepte und Benutzererlebnisse, beispielsweise die Gestenerkennung und die Steuerung von Infotainmentsystemen. Insassenüberwachung und Gestenerkennung ermöglichen dabei komfortable Anwendungen sowie personalisierte Sicherheitsfunktionen.

Aus der WO 2014/032822 A2 ist eine Vorrichtung zur Steuerung von Fahrzeugfunktionen bekannt. Die Vorrichtung weist zumindest ein Interface auf, mit dem ein Benutzer durch statische und/oder dynamische Benutzergesten interagiert. Zudem ist eine Detektionseinheit vorgesehen, die die statischen und dynamischen Benutzergesten erfasst. Des Weiteren wird mit einer Steuereinheit eine Benutzergeste erfasst und eine dementsprechende Fahrzeugfunktion angesteuert. Dabei kann die Detektionseinheit eine oder mehrere Kameras aufweisen, die insbesondere als TOF-Kameras ausgebildet sind. Mit diesen kann vorzugsweise die Bewegung eines Teils des Kopfes, insbesondere des Auges oder der Nase erkannt werden. Darüber hinaus ist die Detektionseinheit dazu ausgelegt, parallele Gesten eines Benutzers und/oder die Gesten von mehreren Personen gleichzeitig und/oder sequentiell zu erkennen.

Für die Überwachung des Fahrers, insbesondere für die Identifizierung von Gesten des Fahrers, ist eine Klassifikation der im Sichtbereich der Bilderfassungseinrichtung befindlichen Objekte von großer Bedeutung.

Ausgehend von dem oben genannten Stand der Technik liegt der Erfindung somit die Aufgabe zugrunde, ein Verfahren, eine Vorrichtung, ein Fahrerassistenzsystem und ein Computerprogrammprodukt anzugeben, durch die die Klassifizierung von Objekten innerhalb eines Innenraums eines Fahrzeugs und das Erkennen von Personen und Gesten der Personen verbessert wird.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zur Klassifizierung von Objekten innerhalb eines Innenraums eines Fahrzeugs angegeben mit folgenden Schritten: Bereitstellen zumindest einer 3D-Bilderfassungseinheit, die zum Erfassen von 3D-Bildern einer Szene eingerichtet ist, Bereitstellen zumindest einer mit der 3D-Bilderfassungseinheit gekoppelten Verarbeitungseinheit, wobei die Verarbeitungseinheit derart eingerichtet ist, die 3D-Bilder von der 3D-Bilderfassungseinheit zu empfangen, Erfassen von 3D-Bildern einer Szene, wobei jedes der 3D-Bilder zumindest ein 2D-Intensitätsbild und zumindest eine 3D-Tiefenkarte der Szene umfasst, Berechnung einer Reflektivitätskarte aus dem zumindest einen 2D-Intensitätsbild und der zumindest einen 3D-Tiefenkarte mittels der Verarbeitungseinheit, Klassifikation zumindest eines Objekts der Szene anhand seiner Reflektivität.

Grundidee der vorliegenden Erfindung ist es also, eine Reflektivitätskarte auf der Grundlage von einem 2D-Intensitätsbild und einer 3D-Tiefenkarte zu erzeugen. Dabei werden das 2D-Intensitätsbild und einer 3D-Tiefenkarte mittels einer 3D-Bilderfassungseinheit erfasst und mittels einer Verarbeitungseinheit weiterverarbeitet.

Das 2D-Intensitätsbild ist ein Bild, bei dem die Signalstärke von der Objektreflexion und dem Objektabstand zu der Beleuchtung der 3D-Bilderfassungseinheit abhängig ist. Die Reflexionscharakteristik einer Oberfläche ist dabei proportional zur empfangenen Beleuchtungsstärke durch den Sensor und der Distanz zwischen Objekt und der Beleuchtungseinheit der 3D-Bilderfassungseinheit gemäß folgender Formel:

$$R_{Objekt} \propto E_{e,Sensor} \times d^2$$

Aus der empfangenen Beleuchtungsstärke durch den Sensor, der Distanz zwischen dem Objekt und der Beleuchtungseinheit und einem konstanten Faktor, lässt sich somit die Reflektivität des Objekts berechnen und für jedes 3D-Bild eine Reflektivitätskarte der Szene erstellen.

In die Berechnung des konstanten Faktors gehen dabei verschiedene Faktoren ein. In einer Ausführungsform der Erfindung umfasst die 3D-Bilderfassungseinheit eine Beleuchtungseinheit, mit der die Szene beleuchtet wird, einen Sensor, der beispielsweise die Laufzeit für jeden Bildpunkt des Sensors separat misst, eine Optik die das von der Umgebung reflektierte Licht wieder einsammelt und die Szene auf den Sensor abbildet. Dabei kann die Optik insbesondere eine Linse zum Sammeln des Lichts umfassen. Des Weiteren kann die 3D-Bilderfassungseinheit beispielsweise einen optischen Bandpassfilter umfassen, der nur die Wellenlänge durchlässt, mit der auch die Beleuchtung arbeitet, wodurch ein großer Teil des störenden Hintergrundlichtes eliminiert wird. Bevorzugt arbeitet die Beleuchtungseinheit im nahen Infrarotbereich (NIR).

Die Reflektivität des Objekts für die zuvor geschilderte Ausführungsform kann dann mittels der folgenden Formel berechnet werden:

$$R_{Objekt} \cong \frac{E_{e,Sensor} \times d^2 \times (2 \times F\# \times (m+1))^2}{I_{e,mod} \times T_{Filter,\lambda} \times T_{Linse}}$$

wobei:

| | |
|---|---|
| $E_{e,\,Sensor}$ | Empfangene Beleuchtungsstärke durch den Sensor |
| d | Distanz von Sensor zum Objekt |
| F# | Apparatur der Linse |
| m | Vergrößerung der Linse |
| $I_{e,\,mod}$ | Beleuchtungsstärke der Beleuchtungseinheit |
| $T_{filter,\,\lambda}$ | Durchlässigkeit des Filters |
| $T_{lens}$ | Durchlässigkeit der Linse |

Das Reflexionsvermögen von Objekten kann dabei zuverlässiger genutzt werden, als die Intensitätsverteilung der durch den Sensor empfangenen Beleuchtungsstärke, um Objekte zu klassifizieren. Die Objekte werden somit nach ihrem Reflexionsgrad klassifiziert.

In einer vorteilhaften Ausgestaltung der Erfindung enthält der Schritt der Klassifizierung des Objekts den zusätzlichen Schritt des Erkennens zumindest einer Person und/oder zumindest einer Geste einer Person. Da beispielsweise die menschliche Haut ein lambertianisches Reflexionsvermögen von 30-35% im NIR-Bereich besitzt, können insbesondere Hautpartien einer Person besonders gut klassifiziert werden. Durch die Klassifikation dieser Hautpartien kann dann auch die Bewegung der Person und insbesondere die von der Person ausgeführten Gesten erkannt werden.

In einer weiter vorteilhaften Ausgestaltung der Erfindung enthält der Schritt des Erfassens von 3D-Bildern einer Szene ein Erfassen einer Szene mittels eines Laufzeitverfahrens zur Distanzmessung. Mittels eines Laufzeitverfahrens zur Distanzmessung lassen sich auf einfache Weise mittels der 3D-Bilderfassungseinheit ein 2D-Intensitätsbild und eine 3D-Tiefenkarte der Szene erstellen.

Erfindungsgemäß ist außerdem eine Vorrichtung zur Klassifizierung von Objekten innerhalb eines Innenraums eines Fahrzeugs angegeben umfassend eine 3D-Bilderfassungseinheit und eine mit der 3D-Bilderfassungseinheit gekoppelten Verarbeitungseinheit zur Durchführung des zuvor beschriebenen Verfahrens.

In einer vorteilhaften Ausgestaltung der Erfindung ist die 3D-Bilderfassungseinheit derart in dem Innenraum des Fahrzeugs angeordnet, dass das Gesichtsfeld der 3D-Bilderfassungseinheit zumindest eine gesamte Vorderreihe des Fahrzeugs überdeckt. Dies ist besonders vorteilhaft da damit Objekt in der Nähe des Fahrers klassifiziert und insbesondere Gesten des Fahrers erkannt werden können.

In einer weiter vorteilhaften Ausgestaltung der Erfindung ist die 3D-Bilderfassungseinheit an einem Dachmodul des Fahrzeugs angeordnet.

Ein im Dachmodul des Fahrzeugs angeordnete 3D-Bilderfassungseinheit hat den Vorteil, dass ein großer Bereich des Innenraums des Fahrzeugs mittels der 3D-Bilderfassungseinheit ausgeleuchtet und erfasst werden kann. In einer Ausführungsform der Erfindung kann es auch vorgesehen sein, dass die 3D-Bilderfassungseinheit beispielsweise in einem Infotainment-Cluster oder einem Instrument-Cluster des Fahrzeugs angeordnet ist. Das Instrument-Cluster ist die zentrale Informationsstelle für den Fahrer. Es zeigt den Fahrzustand, also z. B. Geschwindigkeit, Motordrehzahl und Blinker des Fahrzeugs an. Durch die Interaktion des Fahrers mit dem Instrument-Cluster kann beispielsweise sehr genau eine Geste des Fahrers erkannt werden.

In einer vorteilhaften Ausgestaltung der Erfindung ist die 3D-Bilderfassungseinheit eine Time-of-Flight Kamera. TOF-Kameras haben den Vorteil, dass sie sehr robust und anpassungsfähig sind und keine Kalibrierung benötigen.

In einer vorteilhaften Ausgestaltung der Erfindung ist die 3D-Bilderfassungseinheit eine Stereokamera.

Weiter ist erfindungsgemäß ein Fahrerassistenzsystem angegeben mit einer zuvor beschriebenen Vorrichtung zur Durchführung des zuvor beschriebenen Verfahrens.

Erfindungsgemäß ist außerdem ein Computerprogrammprodukt angegeben, umfassend Befehle, die bei der Ausführung des Programms durch einen Computer diesen veranlassen, das zuvor beschriebene Verfahren auszuführen.

Nachfolgend wird die Erfindung unter Bezugnahme auf die anliegende Zeichnung anhand bevorzugter Ausführungsformen näher erläutert.

Es zeigt

Fig. 1     eine Draufsicht eines Fahrzeugs mit einer Vorrichtung zur Klassifizierung von Objekten innerhalb eines Innenraums des Fahrzeugs gemäß einem Ausführungsbeispiel der Erfindung,

Fig. 2     ein Blockdiagramm einer Vorrichtung zur Klassifizierung von Objekten innerhalb eines Innenraums eines Fahrzeugs gemäß einem weiteren Ausführungsbeispiel der Erfindung,

Fig. 3     ein Ablaufdiagramm eines Verfahrens zur Klassifizierung von Objekten innerhalb eines Innenraums eines Fahrzeugs gemäß einem weiteren Ausführungsbeispiel der Erfindung.

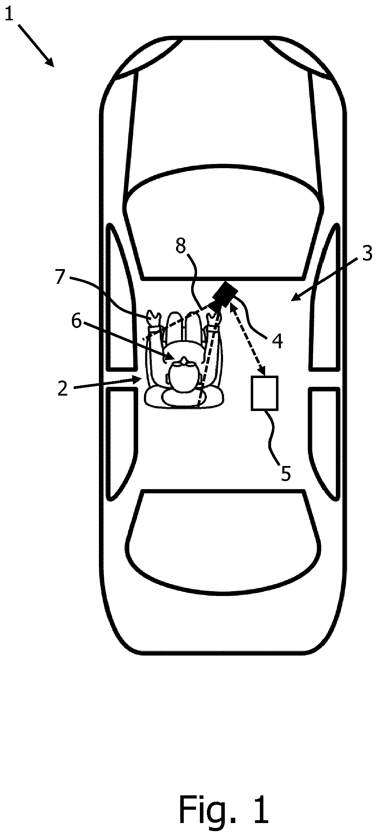

Die Figur 1 zeigt eine Draufsicht eines Fahrzeugs 1 mit einer Vorrichtung zur Klassifizierung von Objekten innerhalb eines Innenraums 3 des Fahrzeugs 1 gemäß einem Ausführungsbeispiel der Erfindung. Das Fahrzeug 1 umfasst dabei eine 3D-Bilderfassungseinheit 4 die zum Erfassen von 3D-Bildern einer Szene eingerichtet ist und eine mit der 3D-Bilderfassungseinheit 4 gekoppelten Verarbeitungseinheit 5. Die Verarbeitungseinheit 5 ist dabei derart eingerichtet, die 3D-Bilder von der 3D-Bilderfassungseinheit 4 zu empfangen und weiterzuverarbeiten. Das Gesichtsfeld 8 der 3D-Bilderfassungseinheit 4 ist in dem in Fig. 1 gezeigten Beispiel auf den Fahrer 2 des Fahrzeugs 1 gerichtet. Es kann aber auch vorgesehen sein, dass das Gesichtsfeld 8 der 3D-Bilderfassungseinheit 4 die gesamte Vorderreihe des Innenraums 3 oder auch der den gesamten Innenraum 3 umfasst. Daher ist es besonders vorteilhaft, wenn die 3D-Bilderfassungseinheit 4 beispielsweise an dem Dachmodul des Fahrzeugs 1 angeordnet ist. Weitere vorteilhafte Plätze für die 3D-Bilderfassungseinrichtung 4 sind beispielsweise auch das Infotainment-Cluster oder das Instrument-Cluster des Fahrzeugs 1. Da der Fahrer 2 mit diesen Clustern agiert, kann eine gute Bilderfassung insbesondere des Fahrers 2 gewährleistet werden. Auch kann eine zweite 3D-Bilderfassungseinheit 4 vorgesehen sein, die beispielsweise nur den Beifahrersitz überwacht.

In einer Ausführungsform der Erfindung umfasst die 3D-Bilderfassungseinheit 4 eine Beleuchtungseinheit, mit der die Szene beleuchtet wird, einen Sensor, der beispielsweise die Laufzeit für jeden Bildpunkt des Sensors separat misst und eine Optik die das von der Umgebung reflektierte Licht wieder einsammelt und die Szene auf den Sensor abbildet. Dabei kann die Optik insbesondere eine Linse zum Sammeln des Lichts umfassen. Des Weiteren kann die 3D-Bilderfassungseinheit 4 beispielsweise einen optischen Bandpassfilter umfassen, der nur die Wellenlänge durchlässt, mit der auch die Beleuchtung arbeitet, wodurch ein großer Teil des störenden Hintergrundlichtes eliminiert wird. Bevorzugt arbeitet die Beleuchtungseinheit im nahen Infrarotbereich (NIR). Die in Fig. 1 gezeigte Vorrichtung kann dabei durch weitere Systeme unterstützt werden. Um die Klassifizierung von Objekten weiter zu verbessern, können beispielsweise weitere Kameras wie z.B. RGB-Kameras oder Wärmebildkameras sowie weitere Detektionssysteme wie z.B. Ultraschallsysteme oder kapazitive Messsysteme vorgesehen sein.

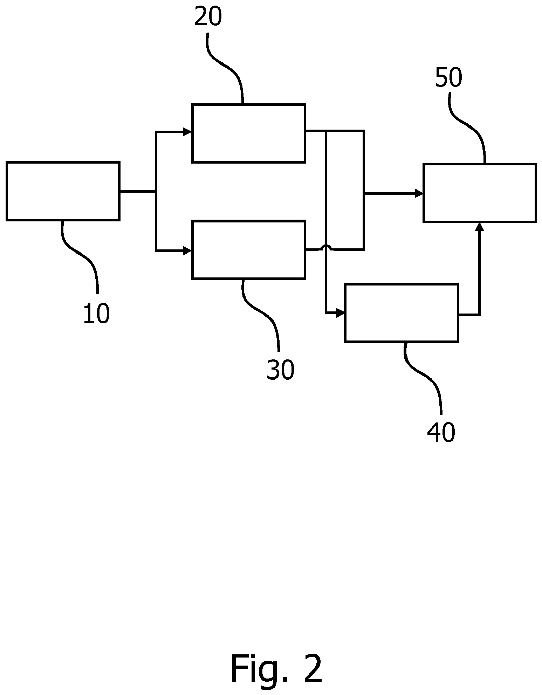

Die Figur 2 zeigt ein Blockdiagramm einer Vorrichtung zur Klassifizierung von Objekten innerhalb eines Innenraums 3 eines Fahrzeugs 1 gemäß einem weiteren Ausführungsbeispiel der Erfindung. Die 3D-Bilderfassungseinheit 4 ist besonders bevorzugt als dreidimensionales Kamerasystem ausgebildet, mittels dem ein Laufzeitverfahren zur Distanzmessung durchführbar ist. Beispielsweise ist die 3D-Bilderfassungseinheit 4 als eine Time-of-flight (TOF) Kamera ausgebildet, welche die Beleuchtungseinheit, zumindest ein optisches Element, zumindest einen optischen Sensor und eine entsprechende Elektronik zur Ansteuerung und Auswertung umfasst.

Das Prinzip der TOF-Kamera beruht auf einem Laufzeitverfahren zur Distanzmessung. Dazu werden beispielsweise ein Fahrzeuginnenraum 3 oder ein Teil des Fahrzeuginnenraums 3 mittels eines von der Beleuchtungseinheit, insbesondere einer Laserdiode, erzeugten Lichtpulses beleuchtet, wobei die TOF-Kamera für jeden Bildpunkt die Zeit misst, die das Licht bis zum Objekt und wieder zurück zum optischen Sensor benötigt. Vorzugsweise ist die benötigte Zeit proportional zur entsprechenden Distanz. Auf dem optischen Sensor wird die erfasste Szene, abgebildet und anschließend entsprechend ausgewertet. Die TOF-Kamera ist dabei sehr robust, anpassungsfähig und benötigt keine Kalibrierung.

Wird in einer Ausführungsform eine TOF-Kamera verwendet werden wie in Fig. 2 gezeigt vier Rohaufnahmen 10 mit unterschiedlichen Phasen aufgenommen. Aus den Rohaufnahmen 10 wird ein 2D-Intensitätsbild 20 und eine 3D-Tiefenkarte 30 einer Szene mittels der Verarbeitungseinheit 5 erzeugt. In Fig. 2 ist weiter gezeigt, dass aus dem 2D-Intensitätsbild 20 und der 3D-Tiefenkarte 30 mittels der Verarbeitungseinheit 5 weiter eine Reflektivitätskarte 40 erzeugt wird. Die Reflektivitätskarte 40 sowie das 2D-Intensitätsbild 20 und die 3D-Tiefenkarte 30 werden einzelne oder auch in Kombination zur Objektklassifikation und zur Gestenerkennung eingesetzt. Dabei ist es besonders vorteilhaft, wenn die reflektiven Eigenschaften der Objekte zur Klassifikation mittels der Reflektivitätskarte 40 verwendet werden. Da viele Objekte unterschiedliche Reflektivitäten aufweisen, können die Objekte genauer klassifiziert werden. Sind die Objekte genau klassifiziert können auf deren Bewegung innerhalb der Szene besser verfolgt werden, wodurch eine genaue Gestenerkennung ermöglicht wird.

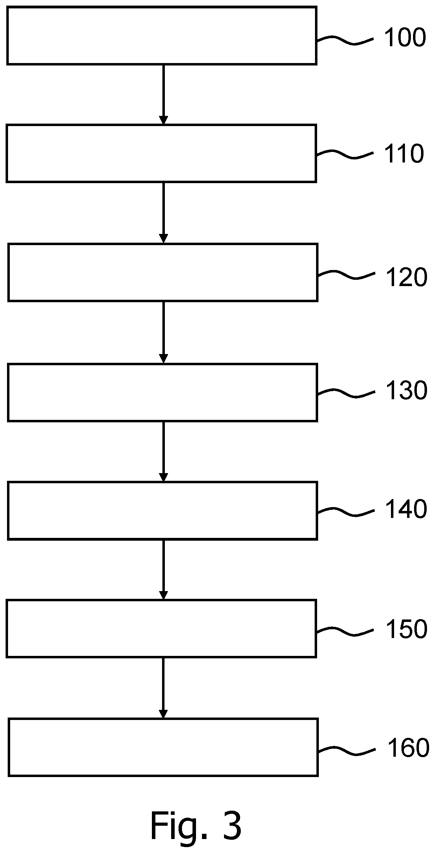

In Figur 3 wird ein Ablaufdiagramm eines Verfahrens zur Klassifizierung von Objekten innerhalb eines Innenraums 3 eines Fahrzeugs 1 gemäß einem weiteren Ausführungsbeispiel der Erfindung gezeigt.

Das Verfahren beginnt mit Schritt 100 in dem eine 3D-Bilderfassungseinheit 4 bereitgestellt wird, die zum Erfassen von 3D-Bildern einer Szene eingerichtet ist. Die 3D-Bilderfassungseinheit 4 kann insbesondere eine TOF-Kamera sein. Die TOF-Kamera umfasst dabei eine Beleuchtungseinheit, mit der die Szene beleuchtet wird, einen Sensor, der beispielsweise die Laufzeit für jeden Bildpunkt des Sensors separat misst und eine Optik die das von der Umgebung reflektierte Licht wieder einsammelt und die Szene auf den Sensor abbildet. Dabei kann die Optik insbesondere eine Linse zum Sammeln des Lichts umfassen. Des Weiteren kann die TOF-Kamera beispielsweise einen optischen Bandpassfilter umfassen, der nur die Wellenlänge durchlässt, mit der auch die Beleuchtung arbeitet, wodurch ein großer Teil des störenden Hintergrundlichtes eliminiert wird. Bevorzugt arbeitet die Beleuchtungseinheit im nahen Infrarotbereich (NIR).

In Schritt 110 wird eine Verarbeitungseinheit bereitgestellt. Die Verarbeitungseinheit dient dazu die 3D-Bilder zu empfangen und zu verarbeiten.

In Schritt 120 werden 3D-Bilder einer Szene erfasst. Dabei umfasst jedes erfasste 3D-Bild zumindest ein 2D-Intensitätsbild 20 und zumindest eine 3D-Tiefenkarte 30 der Szene.

In Schritt 130 werden das 2D-Intensitätsbild 20 und die 3D-Tiefenkarte 30 für die Berechnung einer Reflektivitätskarte 40 verwendet. Die Berechnung der Reflektivitätskarte 40 kann dabei mittels der Verarbeitungseinheit durchgeführt werden. Insbesondere kann es vorgesehen sein, dass die Verarbeitungseinheit Teil eines Fahrerassistenzsystems ist, welches die Berechnung der Reflektivitätskarte 40 durchführt.

In Schritt 140 wird zumindest ein Objekt der Szene anhand seiner Reflektivität klassifiziert. Die Klassifizierung kann ebenfalls mittels der Verarbeitungsvorrichtung erfolgen. Wurde das Objekt klassifiziert können beispielsweise auch Personen und insbesondere Gesten von Personen erkannt werden.

Bezugszeichenliste

| | |
|---|---|
| 1 | Fahrzeug |
| 2 | Fahrer |
| 3 | Innenraum |
| 4 | Bilderfassungseinheit |
| 5 | Verarbeitungseinheit |
| 6 | Gesicht des Fahrers |
| 7 | Hand des Fahrers |
| 8 | Gesichtsfeld |

| | |
|---|---|
| 10 | Rohdaten |
| 20 | 2D-Intensitätsbild |
| 30 | 3D-Tiefenkarte |
| 40 | Reflektivitätskarte |
| 50 | Objektklassifikation und Gestenerkennung |

| | |
|---|---|
| 100 | Bereitstellen einer 3D-Bilderfassungseinheit |
| 110 | Bereitstellen einer Verarbeitungseinheit |
| 120 | Erfassen von 3D-Bildern einer Szene |
| 130 | Berechnung Reflektivitätskarte aus 2D-Intensitätsbild und 3D-Tiefenkarte |
| 140 | Klassifikation des Objekts |

**Patentansprüche**

1. Verfahren zur Klassifizierung von Objekten (2) innerhalb eines Innenraums (3) eines Fahrzeugs (1) mit folgenden Schritten:

   Bereitstellen zumindest einer 3D-Bilderfassungseinheit (4), die zum Erfassen von 3D-Bildern einer Szene eingerichtet ist,
   Bereitstellen zumindest einer mit der 3D-Bilderfassungsseinheit (4) gekoppelten Verarbeitungseinheit (5), wobei die Verarbeitungseinheit (5) derart eingerichtet ist, die 3D-Bilder von der 3D-Bilderfassungseinheit (4) zu empfangen, **gekennzeichnet durch** die weiteren Schritte:
   Erfassen von 3D-Bildern einer Szene, wobei jedes der 3D-Bilder zumindest ein 2D-Intensitätsbild und zumindest eine 3D-Tiefenkarte der Szene umfasst,
   Berechnung einer Reflektivitätskarte aus dem zumindest einen 2D-Intensitätsbild und der zumindest einen 3D-Tiefenkarte mittels der Verarbeitungseinheit (5),
   Klassifikation zumindest eines Objekts (2) der Szene anhand seiner Reflektivität basierend auf der Reflektivitätskarte.

2. Verfahren nach Anspruch 1, **dadurch gekennzeichnet, dass**
   der Schritt der Klassifizierung des Objekts (2) den zusätzlichen Schritt des Erkennens zumindest einer Person und/oder zumindest einer Geste einer Person enthält.

3. Verfahren nach einem der vorherigen Ansprüche, **dadurch gekennzeichnet, dass**
   der Schritt des Erfassens von 3D-Bildern einer Szene ein Erfassen einer Szene mittels eines Laufzeitverfahrens zur Distanzmessung enthält.

4. Vorrichtung zur Klassifizierung von Objekten (2) innerhalb eines Innenraums (3) eines Fahrzeugs (1) umfassend eine 3D-Bilderfassungseinheit (4) und eine mit der 3D-Bilderfassungsseinheit (4) gekoppelten Verarbeitungseinheit (5) zur Durchführung des Verfahrens nach einem der vorherigen Ansprüche.

5. Vorrichtung nach Anspruch 4, **dadurch gekennzeichnet, dass**
   die 3D-Bilderfassungseinheit (4) derart in dem Innenraum (3) des Fahrzeugs (1) angeordnet ist, dass das Gesichtsfeld (8) der 3D-Bilderfassungseinheit (4) zumindest eine gesamte Vorderreihe des Fahrzeugs (1) überdeckt.

6. Vorrichtung nach einem der Ansprüche 4 oder 5, **dadurch gekennzeichnet, dass**
   die 3D-Bilderfassungseinheit (4) an einem Dachmodul des Fahrzeugs (1) angeordnet ist.

7. Vorrichtung nach einem der Ansprüche 4 bis 6, **dadurch gekennzeichnet, dass**
   die 3D-Bilderfassungseinheit (4) eine Time-of-Flight Kamera ist.

8. Vorrichtung nach einem der Ansprüche 4 bis 6, **dadurch gekennzeichnet, dass**
   die 3D-Bilderfassungseinheit (4) eine Stereokamera ist.

9. Fahrerassistenzsystem mit einer Vorrichtung nach einem der Ansprüche 4 bis 8 zur Durchführung des Verfahrens nach einem der Ansprüche 1 bis 3.

10. Computerprogrammprodukt, umfassend Befehle, die bei der Ausführung des Programms durch einen Computer diesen veranlassen, das Verfahren nach einem der Ansprüche 1 bis 3 auszuführen.

**Claims**

1. Method for classifying objects (2) within an interior (3) of a vehicle (1) comprising the following steps:

   providing at least one 3D image capturing unit (4) configured for capturing 3D images of a scene,
   providing at least one processing unit (5) coupled to the 3D image capturing unit (4), the processing unit (5) being configured to receive the 3D images from the 3D image capturing unit (4), **characterized by** the following further steps:

capturing 3D images of a scene, each of the 3D images comprising at least one 2D intensity image and at least one 3D depth map of the scene,

calculating a reflectivity map from the at least one 2D intensity image and the at least one 3D depth map by means of the processing unit (5),

classifying at least one object (2) of the scene with the aid of its reflectivity based on the reflectivity map.

2. Method according to Claim 1, **characterized in that** the step of classifying the object (2) includes the additional step of recognizing at least one person and/or at least one gesture of a person.

3. Method according to either of the preceding claims, **characterized in that**
the step of capturing 3D images of a scene includes capturing a scene by means of a time-of-flight method for distance measurement.

4. Device for classifying objects (2) within an interior (3) of a vehicle (1) comprising a 3D image capturing unit (4) and a processing unit (5) coupled to the 3D image capturing unit (4), for carrying out the method according to any of the preceding claims.

5. Device according to Claim 4, **characterized in that** the 3D image capturing unit (4) is arranged in the interior (3) of the vehicle (1) in such a way that the field of view (8) of the 3D image capturing unit (4) covers at least an entire front row of the vehicle (1).

6. Device according to either of Claims 4 and 5, **characterized in that**
the 3D image capturing unit (4) is arranged on a roof module of the vehicle (1).

7. Device according to any of Claims 4 to 6, **characterized in that**
the 3D image capturing unit (4) is a time-of-flight camera.

8. Device according to any of Claims 4 to 6, **characterized in that**
the 3D image capturing unit (4) is a stereo camera.

9. Driver assistance system comprising a device according to any of Claims 4 to 8 for carrying out the method according to any of Claims 1 to 3.

10. Computer program product, comprising instructions which, when the program is executed by a computer, cause said computer to carry out the method according to any of Claims 1 to 3.


**Revendications**

1. Procédé permettant de classifier des objets (2) à l'intérieur d'un habitacle (3) d'un véhicule (1), comprenant les étapes suivantes consistant à :
fournir au moins une unité d'acquisition d'image 3D (4) qui est conçue pour acquérir des images 3D d'une scène,
fournir au moins une unité de traitement (5) couplée à l'unité d'acquisition d'image 3D (4), l'unité de traitement (5) étant conçue pour recevoir les images 3D de l'unité d'acquisition d'image 3D (4), **caractérisé par** les étapes supplémentaires consistant à :

acquérir des images 3D d'une scène, chacune des images 3D comprenant au moins une image d'intensité 2D et au moins une carte de profondeur 3D de la scène,
calculer une carte de réflectivité à partir de ladite au moins une image d'intensité 2D et de ladite au moins une carte de profondeur 3D au moyen de l'unité de traitement (5),
classifier au moins un objet (2) de la scène à l'aide de sa réflectivité sur la base de la carte de réflectivité.

2. Procédé selon la revendication 1, **caractérisé en ce que**
l'étape consistant à classifier l'objet (2) comprend l'étape supplémentaire consistant à identifier au moins une personne et/ou au moins un geste d'une personne.

3. Procédé selon l'une quelconque des revendications précédentes, **caractérisé en ce que**
l'étape consistant à acquérir des images 3D d'une scène comprend une acquisition d'une scène au moyen d'un procédé de temps de transit pour la mesure de distance.

4. Dispositif permettant de classifier des objets (2) à l'intérieur d'un habitacle (3) d'un véhicule (1), comprenant une unité d'acquisition d'image 3D (4) et une unité de traitement (5) couplée à l'unité d'acquisition d'image 3D (4) pour exécuter le procédé selon l'une quelconque des revendications précédentes.

5. Procédé selon la revendication 4, **caractérisé en ce que** l'unité d'acquisition d'image 3D (4) est disposée dans l'habitacle (3) du véhicule (1) de telle sorte que le champ visuel (8) de l'unité d'acquisition d'image 3D (4) couvre au moins toute une rangée avant du véhicule (1).

6. Dispositif selon l'une quelconque des revendications 4 ou 5, **caractérisé en ce que** l'unité d'acquisition d'image 3D (4) est disposée sur un module de toit du véhicule (1).

7. Dispositif selon l'une quelconque des revendications 4 à 6, **caractérisé en ce que** l'unité d'acquisition d'image 3D (4) est une caméra temps de vol.

8. Dispositif selon l'une quelconque des revendications 4 à 6, **caractérisé en ce que** l'unité d'acquisition d'image 3D (4) est une caméra stéréo.

9. Système d'assistance au conducteur, comprenant un dispositif selon l'une quelconque des revendications 4 à 8 pour exécuter le procédé selon l'une quelconque des revendications 1 à 3.

10. Produit de programme informatique, comprenant des instructions qui, lorsque le programme est exécuté par un ordinateur, font que celui-ci exécute le procédé selon l'une quelconque des revendications 1 à 3.

# Fig. 1

Fig. 2

Fig. 3

**EP 3 934 929 B1**

**IN DER BESCHREIBUNG AUFGEFÜHRTE DOKUMENTE**

**In der Beschreibung aufgeführte Patentdokumente**

- WO 2014032822 A2